# EUROPEAN PATENT APPLICATION

(11) **EP 2 227 970 A1**
(43) Date of publication of application: **15.09.2010**
(21) Application number: 09425095.8
(22) Date of filing: 09.03.2009
(51) Int. Cl.: A23L 2/02, A23L 2/04, A23L 2/70

(54) **A process for producing fruit juices.**

(71) Applicant: CFT S.p.A., 43100 Parma (IT)
(72) Inventor: Catelli, Roberto, 43100 Parma (IT); Romei, Stefano, 43100 Parma (IT); Gozzi, Mario, 43100 Parma (IT)
(74) Representative: Colò, Chiara

(57) **Abstract**

The process for producing fruit juices comprises a stage of obtaining a fruit purée with an ultra-rapid extraction-deactivation process in an anaerobic environment, performed by means of immediate refining and a contemporaneous heating of a fruit triturate in an anaerobic environment, and a subsequent stage of pressing or centrifugation of the purée, with the aim of obtaining the fruit juice, which may be preceded by a stage of sterilisation-cooling and of temporary storing of the purée.

## Description

### Description.

The invention relates to a process for producing fruit juices.

In particular, the process of the present invention is suitable for production of fruit juices, both clear and cloudy, which contain only fruit with no addition of chemical agents for colouring, no preservatives, no water nor other products.

The most common prior art for obtaining fruit juices consists in mincing the fruit and in a subsequent triturate-pressing, which contains all the parts which make up the fruit, with the aim of separating the juice from the fibrous parts and the waste. Often, after a first pressing, the waste is diluted with tepid water, subjected to an enzymatic treatment and subjected to a second pressing.

Between the trituration stage and the pressing stage, which however have to be done in rapid succession, a stage of addition of ascorbic acid is necessary, which is added in quite relevant quantities in particular in the production of cloudy juices (normally in the range of 400-800 ppm); this addition enables the product to be preserved from oxidising phenomena of enzymatic nature.

Apart from contributing a not-inconsiderable increase to costs of the process, the necessary addition of ascorbic acid should be signalled in the labelling of the finished product, which thus cannot be declared exempt from addition of chemical products.

A further process for obtaining fruit juice, which in this case might more correctly be called nectars, consists in diluting a fruit purée with water. Purée is a semi-finished product which comprises fibrous parts in suspension in the fruit juice, which is also used for the production of homogenised products, jams and the like.

In this case too, the addition of anti-oxidants to the original purée, such as ascorbic acid, does not allow the finished product to be declared as being free of chemical products.

The aim of the present invention is to provide a process for production of fruit juices which does not exhibit the problems of processes of known type and which enables them to be declared as products without chemical additives.

An advantage of the process of the present invention is that is obtains fruit juices having excellent taste and aesthetic properties.

A further advantage of the process of the present invention is that it is more economical with respect to processes of known type from the point of view of production costs.

Further characteristics and advantages of the process of the invention will better emerge from the detailed description that follows of the various stages of the process.

The process for production of fruit juices of the invention initially comprises a stage of obtaining a fruit purée which is performed by means of a process of extraction - anaerobic and ultra-rapid deactivation which enables enzymatic deactivation without having to recur to the addition of any inhibitor agent, such as for example ascorbic acid. In particular, the purée is obtained by means of a process which includes, after entry into an oxygen-free environment, the trituration of the fruit, the immediate separation of peel, seeds and twigs and all the other undesired parts and an immediate heating. In this way, by means of the process known from patent application EP 2.022.342 belonging to the same applicant, a purée is obtained in which without any chemical additives the pectolytic and oxidising enzymes are deactivated; the purée further exhibits excellent taste, aesthetic and physical characteristics which are stably maintained over a long time period, and is composed of 100% fruit with no addition.

The purée is then subjected to a successive stage of separation of the fibrous part from the juice, performed by pressing or centrifugation, which enables a fruit juice to be obtained which, according to the type of pressing or centrifugation, will be a clear juice, i.e. completely without fibrous parts, or a cloudy juice, i.e. with the presence of a certain quantity of fibres. The stage of pressing or centrifugation is performed using known-type plants and machines.

Between the stage of obtaining the purée and the stage of pressing, there can be the following stages: sterilisation, cooling and subsequent temporary aseptic storing of the purée; in this way the purée can be stored as a semi-finished product and be sent on subsequently, and even in other establishments which are not the same as the one the purée was obtained in, for the stage of pressing which is the stage the fruit juice is produced from. This is made possible by the fact that the characteristics of the purée are such that it does not undergo any degradation, at least over reasonably long times (which can be as long as several months).

The stage of pressing or centrifuging of the purée, which differently to the triturate is a product in which the enzymes are no longer active and therefore does not cause any degradation of the product to be pressed or centrifuged, can be performed with no further addition of deactivators, in particular ascorbic acid.

Further, the stage of pressing or centrifuging the purée, which differently to triturate is lacking in waste constituted by peel, seeds and the like which are present in the triturate, is easier and more rapid and leads to a smaller use of energy; this contributes, together with the possibility of not using ascorbic acid which represents an additional cost in known processes, to rendering the process of obtaining fruit juices more economical.

## Claims

1. A process for producing fruit juices, **characterised in that** it comprises a stage of obtaining a fruit purée, with an ultra-rapid extraction-deactivation process in an anaerobic environment, which fruit purée contains fibrous parts and fruit juice, in which enzymatic deactivation has been performed, and a subsequent stage of separating the fibrous parts of the purée in order to obtain the fruit juice.

2. The process of claim 1, **characterised in that** the stage of separating the fibrous parts is done by means of pressing the purée.

3. The process of claim 1, **characterised in that** the stage of separating the fibrous parts is done by centrifugation of the purée.

4. The process of claim 1, **characterised in that** between the stage of obtaining the purée and the stage of pressing the purée, there is comprised a stage of sterilisation, a stage of cooling, and a stage of temporary storing of the purée.

5. The process of claim 1, **characterised in that** the stage of obtaining the purée is performed by means of a process, performed without addition of inhibitor agents, which includes an inlet of the fruit into an oxygen-free environment, trituration of the fruit, immediate separation of peels, seeds and twigs and all other undesired parts therefrom, refining of the fruit triturate and immediate heating of the refined triturate.
